# EUROPÄISCHE PATENTANMELDUNG

(11) **EP 0 588 001 A1**
(43) Veröffentlichungstag der Anmeldung: **23.03.1994**
(21) Anmeldenummer: 93110053.1
(22) Anmeldetag: 24.06.1993
(51) Int. Cl.: B65G 47/54

(54) **Vorrichtung zum Umsetzen von Fördergütern von einem Querförderer in Regalstrassen**

(30) Priorität: 18.09.1992 DE 4231249
(71) Anmelder: Hermann Schmidt Maschinenfabrik, D-44536 Lünen (DE)
(72) Erfinder: Schmidt, Hermann, D-4670 Lünen (DE)
(74) Vertreter: Patentanwälte Meinke, Dabringhaus und Partner

(57) **Zusammenfassung**

Mit einer Vorrichtung zum Umsetzen von Fördergütern, wie Paletten, von einem als doppelspurigen Ketten- oder Bandförderer ausgebildeten Querförderer (2) auf zum Querförderer (2) im rechten Winkel angeordnete Förderer (5) mittels einer Abschubeinheit zur Übergabe der Fördergüter (3) auf die Förderer (5), soll eine Lösung geschaffen werden, mit der zum einen ein praktisch erschütterungsfreies Umsetzen der auf dem Querförderer befindlichen Objekte möglich ist und wobei zum anderen eine Einsparung an Stillstandzeiten erreichbar ist.

Dies wird dadurch erreicht, daß der Querförderer (2) als permanent umlaufender Ketten- oder Bandförderer ausgebildet ist und der Zwischenförderer (6) längs des Querförderers (2) zwischen den Ketten oder Bändern mittels eines steuerbaren Antriebs mindestens auf Fördergeschwindigkeit des Querförderers (2) beschleunigbar ist sowie verzögerbar und vor einem Förderer (5) positionierbar ist.

## Beschreibung

Die Erfindung richtet sich auf eine Vorrichtung zum Umsetzen von Fördergütern, wie Paletten, Kleincontainern, Paketen, von einem als doppelspurigen Ketten- oder Bandförderer ausgebildeten Querförderer auf zum Querförderer im rechten Winkel angeordnete Förderer der im Oberbegriff des Anspruches 1 angegeben Gattung.

Es ist bekannt, Objekte in sogenannten Querförderern mittels stationärer Eckstationen, die einer Regalstraße od. dgl. zugeordnet sind, abzuheben und in die Regalstraßen einzuführen. Je nach Robustheit oder Art des zu handhabenden Gutes können dabei die Eckstationen sehr unterschiedlich ausgestaltet sein, es kann sich um einfache Ausschubstößel handeln oder um in die Bewegungsbahnen des Querförderers einfahrende Umlenkbleche, etwa bei Paketsortieranlagen, es kann sich aber auch um mit angetriebenen Rollen versehene Hubelemente handeln, die dann in Aktion treten, wenn das auszuschiebende Objekt über der Eckstation zum Stillstand gekommen ist, sei es, daß es gegen einen Anschlag läuft oder aber, daß der Querförderer in der entsprechenden Position zum Stillstand gebracht wird, wie dies in der gattungsbildenden DE-A-31 19 182 oder der US-3 239 054 beschrieben ist.

Im Zusammenhang mit einer Mehrzahl von Lösungsvorschlägen geförderte Güter aus einer Förderstrecke auszuschleusen, zeigt die Zeitschrift "Ingenieur-Digest 1/1972, Seiten 60/61", auch einen Abgabewagen mit einer anschließenden Rollenbahnkurve oder -weiche.

Viele Produkte lassen ein einfaches Ausstoßen nicht zu, etwa wenn es sich um empfindliche Geräte handelt, wie beispielsweise Fernsehgeräte od. dgl. Auch bringt das Anhalten der Produkte auf einem Querförderer den Nachteil mit sich, daß sich Stillstandzeiten ergeben, die unbefriedigend sind.

Aufgabe der Erfindung ist die Schaffung einer Lösung, mit der zum einen ein praktisch erschütterungsfreies Umsetzen der auf dem Querförderer befindlichen Objekte möglich ist und wobei zum anderen eine Einsparung an Stillstandzeiten erreichbar ist.

Mit einer Vorrichtung der eingangs bezeichneten Art wird diese Aufgabe gemäß der Erfindung dadurch gelöst, daß der Querförderer als permanent umlaufender Ketten- oder Bandförderer ausgebildet ist und der Zwischenförderer längs des Querförderers zwischen den Ketten oder Bändern mittels eines steuerbaren Antriebs mindestens auf Fördergeschwindigkeit des Querförderers beschleunigbar ist sowie verzögerbar und vor einem Förderer positionierbar ist.

Mit der Erfindung wird zum einen erreicht, daß der Querförderer permanent umlaufen kann. Durch eine verfahrbare, im Antrieb sychronisierbare Eckstation ist es zum anderen möglich, die Objekte von dem Querförderer bei einer synchronisierten Geschwindigkeit abzuheben, d.h. bei Geschwindigkeitsgleichheit von Querförderer und Eckstation. Wird das Objekt von der Eckstation übernommen, kann es von dieser dann von der Übergabeposition etwa zu einer Regalstraße bei Geschwindigkeit 0 abgeschoben werden.

Vorteilhaft ist bei der Erfindung, daß die Eckstation durch den Antrieb aus einer Ruhelage in die Fördergeschwindigkeit des Querförderers bewegbar und vor der jeweiligen Umsetzposition in eine Ruhelage abbremsbar ist, wobei die Vorschubeinheit das auf dem Querförderer bewegte und umzusetzende Gut bei synchroner Geschwindigkeit von Querförderer und Eckstation vom Querförderer abhebt.

Aus der FR-A-20 96 810, der EP-A-0 395 178 oder der CH-Z: Technische Rundschau, Heft 38/September 1991, Seiten 84-89, sind andere Lösungen bekannt, ein möglichst stoßfreies Umsetzen zu verwirklichen.

Die Erfindung sieht auch vor, daß die Vorschubeinheit der Eckstation als an sich bekannte Rollenbahn in Querausrichtung zum Querförderer mit angetriebenen Rollen ausgebildet ist, wobei die Rollenbahn über die Hubeinrichtung von einer abgesenkten Ruheposition in eine über dem Niveau des Querförderers liegenden Arbeitsposition hebbar ist.

Eine besonders einfache und robuste Ausgestaltung der erfindungsgemäßen Vorrichtung besteht darin, daß die Vorschubeinheit über einen eine schiefe Ebene beaufschlagenden Hubwagen heb- und senkbar ausgebildet ist.

Um sehr genaue Positionierungen und auch hohe Eigengeschwindigkeiten der Eckstation zu ermöglichen, sieht die Erfindung in weiterer Ausgestaltung vor, daß die Eckstation mittels eines Ketten- oder Zahnbandes und/oder mittels Servomotors mit Spindel im Bereich des Querförderers verfahrbar angeordnet ist.

Zur Lösung der weiter oben angegebenen Aufgabe sieht die Erfindung auch ein Verfahren vor, daß sich dadurch auszeichnet, daß das umzusetzende Gut von einer in der Bewegungsbahn des Querförderers verfahrbaren Eckstation bei synchroner Geschwindigkeit zwischen Eckstation und Querförderer abgehoben und von der verfahrbaren Eckstation in die Position vor der gewünschten Umsetzposition abgebremst und in die Regalstraße eingeschoben wird.

Eine zweckmäßige Ausgestaltung dieser Verfahrensweise besteht darin, daß die Förderer des Querförderers mit den zu fördernden Objekten während des Umsetzvorganges der Eckstation beibehalten wird.

Die Erfindung sieht auch vor, daß die verfahrbare Eckstation über eine Steuerung in oder gegen die Förderrichtung des Querförderers in gegenüber der Fördergeschwindigkeit des Querförderers deutlich erhöhten Geschwindigkeit verfahren wird, wobei das umzusetzende Gut kurz vor Erreichen der jeweiligen Regalstraße von der in der Geschwindigkeit synchronisierten Eckstation übernommen, vom Querförderer abgehoben, abgebremst und dann umgesetzt wird.

Weitere Merkmale, Einzelheiten und Vorteile der Erfindung ergeben sich aufgrund der nachfolgenden Beschreibung sowie anhand der Zeichnung. Diese zeigt in
- Fig. 1: eine Aufsicht auf eine Förderanlage mit der erfindungsgemäßen Vorrichtung,
- Fig. 2: eine Seitenansicht auf den Teil eines Querförderers gemäß Pfeil II in Fig. 1a sowie in
- Fig. 3: eine Ansicht gemäß Pfeil III in Fig. 1a auf die erfindungsgemäße Vorrichtung, wobei die

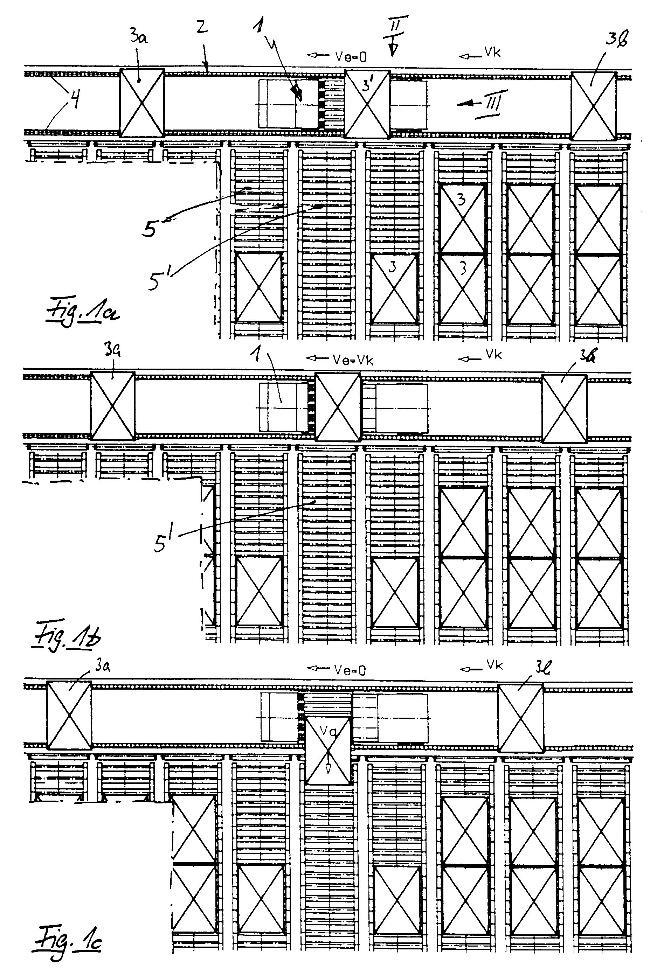

- Fig. 1 bis 3: jeweils als Fig. 1a bis 1c bzw. 2a bis 2c bzw. 3a bis 3c die erfindungsgemäße Vorrichtung jeweils in drei unterschiedlichen Arbeitspositionen zeigen.

Die allgemein mit 1 bezeichnete Vorrichtung nach der Erfindung wird in Verbindung mit einem Querförderer 2 eingesetzt, der einzusetzende Güter 3 z.B. auf zwei Förderketten 4 in Fig. 1 von rechts nach links fördert. In senkrechter Ausrichtung zum Querförderer 2 sind im dargestellten Beispiel eine Vielzahl von Rollenbahnen 5 vorgesehen.

Die Vorrichtung 1 ist als Eckstation ausgebildet und in der Bewegungsbahn des Querförderers 2 in beiden Richtungen verfahrbar angeordnet, und zwar in einer Geschwindigkeit, die deutlich höher sein kann, als die Fördergeschwindigkeit Vk der Förderketten 4.

Die Eckstation 1 ist mit einer Anhubeinrichung 6 ausgerüstet, die z.B. mit antreibbaren Rollen 6a versehen ist, deren Ausrichtung derjenigen der Rollenbahnen 5 entspricht. Die Anhubeinrichtung 6 wird beispielsweise von einem über eine schiefe Ebene 7 bewegbaren Hubwagen gebildet, was in den Figuren nicht näher dargestellt ist.

In den Figuren ist noch das Maß der Geschwindigkeiten der Förderketten (Vk) und das Maß der Geschwindigkeit der Eckstationen (Ve) angegeben.

Bezugnehmend auf die unterschiedlichen Positionen in den Fig. 1a, 2a, 3a bzw. 1b, 2b, 3b und schließlich 1c, 2c, 3c sei die Wirkungsweise der Vorrichtung angegeben:
Ein umzusetzendes Gut, in Fig. 1a mit 3' bezeichnet, soll vom Querförderer auf die noch nähere Rollenbahn 5' umgesetzt werden. Beispielsweise befindet sich das Gut bzw. die Palette in der in Fig. 1a angegebenen Position kurz vor der Rollenbahn 5'. Der Querförderer mit der Eckstation 1 befindet sich beispielsweise in Ruhe (Ve = 0).

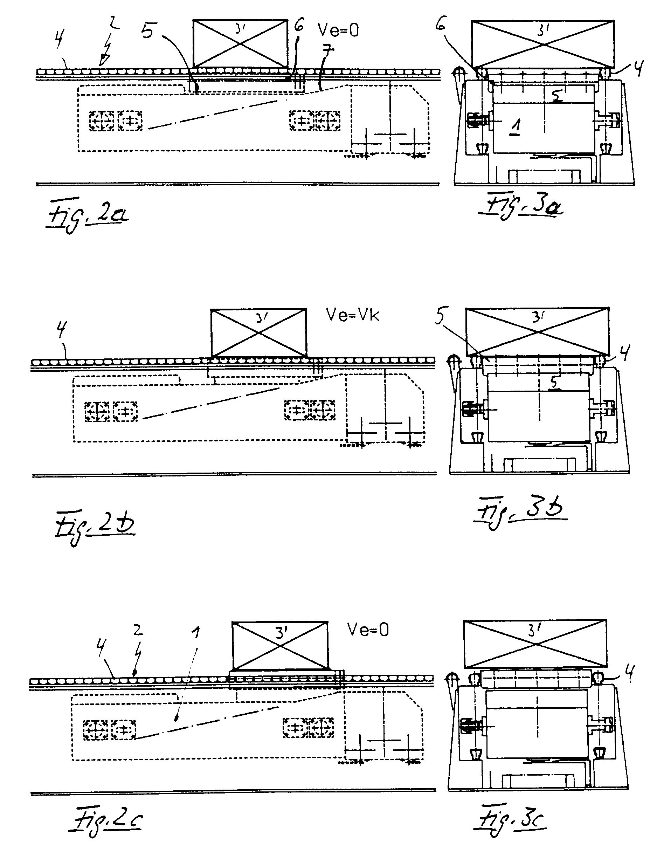

Nunmehr wird die Eckstation 1 auf die Geschwindigkeit Vk beschleunigt. Bei Erreichen dieser Geschwindigkeit (Ve = Vk) entspricht das Niveau der Rollenbahn 6a der Hubeinrichtung 6 genau dem Niveau der Förderketten 4 des Querförderers. Diese Position ist in den Fig. 2b bzw. 3b dargestellt.

Wie sich aus Fig. 1b ergibt, ist in dieser Position die Rollenbahn 5' noch nicht genau erreicht. Nunmehr wird die Eckstation 1 bis zur exakten Abgabeposition weiter verfahren und gleichzeitig abgebremst, derart, daß die Relativgeschwindigkeit Ve der Eckstation zur Rollenbahn 5' 0 ist, wie sich dies aus Fig. 1c ergibt. Gleichzeitig wird das zu übergebende Gut 3' noch bis in die Übergabeposition über die Ketten 4 angehoben, diese Position ergibt sich aus den Fig. 2c und 3c.

Nunmehr kann das zu übergebende Gut abgeschoben werden, die Abschubgeschwindigkeit ist in Fig. 1c eingezeichnet und mit Va bezeichnet.

Wie sich aus den Figuren ergibt, werden sonstige auf dem Querförderer befindliche Güter, z.B. mit 3a und 3b bezeichnet, weitergefördert, d.h. der Querförderer muß nicht abgebremst werden, um die Übergabe zu ermöglichen. Ist die Umsetzung erfolgt, kann die Eckstation 1 in eine nächste Arbeitsposition verbracht werden, wobei nach einem kurzen Fahrweg über die Hubeinrichtung 6 die Rollen 6a wieder so weit abgesenkt werden, daß die Eckstation 1 auch auf dem Querförderer befindliche Güter unterfahren kann.

Natürlich ist das beschriebene Ausführungsbeispiel der Erfindung noch in vielfacher Hinsicht abzuändern, ohne den Grundgedanken zu verlassen. So ist die Erfindung insbesondere nicht auf die Art der Hubeinrichtung, Antrieb und Steuerung der Eckstation bzw. Art des Querförderers beschränkt.

## Patentansprüche

1. Vorrichtung zum Umsetzen von Fördergütern (3), wie Paletten, Kleincontainern, Paketen, von einem als doppelspurigen Ketten- oder Bandförderer ausgebildeten Querförderer (2) auf zum Querförderer (2) im rechten Winkel angeordnete Förderer (5), wie Regalstraßen, Lagerkanäle, Rollenbahnen, mittels einer Abschubeinheit zur Übergabe der Fördergüter (3) auf die Förderer (5), wobei die Abschubeinheit als hub- und senkbarer sowie antreibbarer Zwischenförderer (6) ausgebildet ist, der von einer Position unterhalb des Querförderers (2) in eine das umzusetzende Fördergut (3) vom Querförderer (2) abhebende Position bringbar ist,
dadurch gekennzeichnet,
daß der Querförderer (2) als permanent umlaufender Ketten- oder Bandförderer ausgebildet ist und der Zwischenförderer (6) längs des Querförderers (2) zwischen den Ketten oder Bändern mittels eines steuerbaren Antriebs mindestens auf Fördergeschwindigkeit des Querförderers (2) beschleunigbar ist sowie verzögerbar und vor einem Förderer (5) positionierbar ist.

2. Vorrichtung nach Anspruch 1,
dadurch gekennzeichnet,
daß der Zwischenförderer (6) als an sich bekannter Rollenförderer ausgebildet ist.

3. Vorrichtung nach Anspruch 2,
dadurch gekennzeichnet,
daß der Rollenförderer über einen eine schiefe Ebene (7) beaufschlagenden Hubwagen heb- und senkbar ausgebildet ist.

4. Vorrichtung nach einem der vorangehenden Ansprüche,
dadurch gekennzeichnet,
daß der Zwischenförderer (6) mittels eines Kettentriebes, eines Zahnriementriebes oder mittels Servomotor mit Spindel verfahrbar ist.

5. Verfahren zum Umsetzen von Paketen, Kleincontainern, Paletten od. dgl. von einem Querförderer in zum Querförderer im rechten Winkel angeordneten Regalstraßen, Lagerkanäle, Rollenbahnen od. dgl., wobei das umzusetzende Gut mittels einer Eckstation vom Querförderer in die gewünschte Regalstraße eingeschoben wird,
dadurch gekennzeichnet,
daß das umzusetzende Gut von einer in der Bewegungsbahn des Querförderers verfahrbaren Eckstation bei synchroner Geschwindigkeit (Ve = Vk) zwischen Eckstation und Querförderer abgehoben und von der verfahrbaren Eckstation in die Position vor der gewünschten Umsetzposition abgebremst und in die Regalstraße eingeschoben wird.

6. Verfahren nach Anspruch 5,
dadurch gekennzeichnet,
daß die Förderung des Querförderers mit den zu fördernden Objekten während des Umsetzvorganges der Eckstation beibehalten wird.

7. Verfahren nach Anspruch 5 oder 6,
dadurch gekennzeichnet,
daß die verfahrbare Eckstation über eine Steuerung in oder gegen die Förderrichtung des Querförderers in gegenüber der Fördergeschwindigkeit des Querförderers deutlich erhöhten Geschwindigkeit verfahren wird, wobei das umzusetzende Gut kurz vor Erreichen der jeweiligen Regalstraße von der in der Geschwindigkeit synchronisierten Eckstation übernommen, vom Querförderer abgehoben, abgebremst und dann umgesetzt wird.
